# EUROPÄISCHE PATENTSCHRIFT

(11) **EP 2 451 135 B1**
(45) Veröffentlichungstag und Bekanntmachung des Hinweises auf die Patenterteilung: **18.06.2014**
(21) Anmeldenummer: 10190259.1
(22) Anmeldetag: 05.11.2010
(51) Int. Cl.: H04L 29/08, H04W 8/18

(54) **Verfahren und System zur Provisionierung von Anwendungen auf SIM-Karten eines mobilen Endgerätes**
Method and system for provisioning applications on SIM cards of a mobile terminal device
Procédé et système de provisionnement d'applications sur des cartes SIM d'un terminal mobile

(43) Veröffentlichungstag der Anmeldung: 09.05.2012
(73) Patentinhaber: Deutsche Telekom AG, 53113 Bonn (DE)
(72) Erfinder: Ren, Zhiyun, 12357 Berlin (DE); Heuer, Jörg, 14163 Berlin (DE); Yin, Ming, 12203 Berlin (DE); Zhou, Jianshen, 12357 Berlin (DE); Hofmann, Klaus-Peter, 12205 Berlin (DE)
(74) Vertreter: 2K Patentanwälte Blasberg Kewitz & Reichel

(56) Entgegenhaltungen:
- EP-A1- 1 383 352
- WO-A1-2004/014090
- WO-A1-2009/078775
- WO-A1-2010/096994
- US-A1- 2006 236 092

## Beschreibung

Die Erfindung betrifft ein Verfahren und ein System zur Provisionierung von Anwendungen auf SIM-Karten eines mobilen Endgerätes über eine Web-Service-Schnittstelle.

### Überblick über den Stand der Technik

SIM-Karten (Subscriber Identity Module) sind heutzutage Multiapplikationsplattformen, auf die in der Programmiersprache Java geschriebene Anwendungen (wobei die SIM-Karte dem Javacard-Standard entspricht) nachgeladen werden können. Dies kann einerseits über die Kontakte der SIM-Karte mit einem Kartenleser erfolgen, oder auch über SMS über die GSM (Global System for Mobile Communications) - bzw. UMTS (Universal Mobile Telecommunications System) /HSDPA (High Speed Downlink Packet Access) -Schnittstelle. Den Vorgang der Aufbringung von Anwendungen nennt man Provisionierung. Geschieht dies über die Funkschnittstelle SMS/GSM/UMTS, spricht man auch von Over-the-air-Provisionierung (OTA). Es sei darauf hingewiesen, dass die vorliegende Erfindung nicht nur auf den aktuellen Javacard-Standard beschränkt sein soll. Der Begriff JAVA wird im Folgenden für alle möglichen Softwaren verwendet. Jegliche Software, die auf der SIM- Karte ablegbar ist, soll hiervon abgedeckt sein. Auch die SIM-Karte steht nicht nur für GSM und UMTS, sondern soll alle möglichen Funkstandards abdecken, die entsprechende Karten einsetzen.

Bisher geschieht die Provisionierung der zur Zeit auf SIM-Karten geladenen Java-Anwendungen bei der Produktion der SIM über die Kontakte oder aber durch den Netzbetreiber over-the-air in einem Netzbetreiber-spezifischen Prozess, während die SIM-Karte bereits bei den Kunden im Telefon im Einsatz ist. Dieser Prozess ist nicht für Dritte zugänglich und kann nicht durch den Benutzer bestimmt werden.

Weiterhin diskutiert wird in den GSM-Standardisierungsgremien der Begriff des sogenannten "Trusted Service Manager" (TSM). Dieser ist ein Intermediär, der an die internen OTA-Mechanismen der verschiedenen Netzbetreiber angebunden ist, und Service-Anbietern, die Anwendungen auf die SIM-Karten von Kunden aufbringen möchten, eine standardisierte Schnittstelle zur Provisionierung von Anwendungen auf SIM-Karten anbietet. Diese Funktion des TSM steht bisher allerdings nicht im ausreichenden Umfang zur Verfügung.

Die Druckschriften WO2008055302 (A1), US 2008/005/014 A1 und US 2004/0082346 A1 beschreiben entsprechende Verfahren und deren Vorgehensweisen auf diesem Gebiet.

Die EP 1383 352 A1, WO2010/096994, WO2004/014090, WO2009/078775 erlauben das Hochladen von Anwendungen als Antwort auf eine Benutzeranfrage über den SIM OTA Enabler an ein mobiles Telefon.

### Überblick über die Erfindung

Die vorliegende Erfindung öffnet das interne Verfahren des Netzbetreibers dahingehend, das über öffentlich publizierte Schnittstellen Dritte ihre Anwendungen für die SIM-Karten der Kunden des Netzbetreibers hochladen und installieren können. Dies ermöglicht den Benutzern des mobilen Endgerätes, individuell Anwendungen auf die SIM-Karte zu laden, die vorzugsweise aus einer Vielzahl von Anwendunden auswählbar sind.

Die Ansprüche der vorliegenden Erfindung beschreiben diesen Prozess und entsprechende Systeme.

Im Einzelnen handelt es sich um ein Verfahren zur individuellen Bereitstellung von Anwendungen auf einem mobilen Endgerät, das eine SIM-Karte aufweist, auf der Anwendungen ablegbar und ausführbar sind, mit einem SIM OTA Enabler, der vom Netzwerkanbieter bereitgestellt wird, und Zugriff auf Anwendungen besitzt, die auf der SIM-Karte ablegbar und ausführbar sind. In der Regel ist die Anwendung auf einem Dateiserver oder einer Datenbank abgelegt. Das Verfahren umfasst die Schritte:
Senden einer Anwendungsanfrage an den SIM OTA Enabler oder ein System, das den SIM OTA Enabler umfasst (Enabler Platform) bzw. in der Lage ist, diesen anzusteuern, durch einen Benutzer einer SIM-Karte zum Herunterladen einer Anwendung, wobei eine Identifikation der SIM-Karte und der Anwendung übertragen wird. Anhand dieser Identifikationen sind die SIM-Karte sowie die Anwendung eindeutig erkennbar. In der Regel handelt es sich MSISDN oder IMSI der SIM sowie ein Identifikation auf eine vorab über "Submit Application" hochgeladene Anwendung. In einer weiteren Ausführungsform können zusätzlich noch Konfigurationsparameter übertragen werden, mit der die Anwendung im Vorfeld parametrisiert wird.

Danach erfolgt ein Prüfen der Anwendungsanfrage auf Zulässigkeit auf der Basis eines Regelwerks durch den SIM OTA Enabler. Hierbei werden die SIM-Identität überprüft, die Identität der Anwendung, es können auch weitere Daten, wie Kontostand etc. geprüft werden. Bei einer Zulässigkeit erfolgt ein Zugreifen auf die Anwendung durch den SIM OTA Enabler und es erfolgt ein Übermitteln der Anwendung über OTA (5) an die SIM auf dem mobilen Endgerät. Für die Übermittlung kann eine Management -SMS oder BIP-Bearer (Bearer Independent Protocol) verwendet werden.

Zusätzlich kann nach dem Empfangen einer Anwendungsanfrage eine Information an den Anbieter der Anwendung gesendet werden, der die Anwendung initialisiert, personalisiert, löscht und/oder aktualisiert. Diese Aktionen können durch eine Nachricht an den SIM OTA Enabler übermittelt werden und von diesem an die SIM des mobilen Endgerätes weitergeleitet werden.

Zur einfachen Benutzerführung umfasst das mobile Endgerät eine SIM-Toolkit-Funktion, die ein Benutzerinterface auf dem mobilen Endgerät bereitstellt, durch das die Anwendungsanfrage vereinfacht interaktiv erzeugt werden kann. Entsprechende Menüs und Dialoge können von der SIM-Karte erzeugt werden.

Ein weiterer Teil der Erfindung ist ein System zur individuellen Bereitstellung von Anwendungen auf einem mobilen Endgerät, das eine SIM-Karte aufweist, auf der Anwendungen ablegbar und ausführbar sind, umfassend einem SIM OTA Enabler, der Zugriff auf Anwendungen besitzt, die auf der SIM-Karte ablegbar und ausführbar sind. Bei diesem System handelt es sich vorzugsweise um ein Serversystem in einem Netzwerk des Anbieters. Dieses System umfasst eine Empfangseinheit für Anwendungsanfragen von einem Benutzer einer SIM-Karte, zum Herunterladen einer Anwendung, wobei die Identifikation zur Bestimmung der SIM-Karte übertragen wird. Die Empfangseinheit kann eine Netzwerkschnittstelle sein in Kombination mit einem Prozessor. Die Prüfeinheit basiert ebenfalls auf einem Prozessor, der die Anwendungsanfrage auf Zulässigkeit auf der Basis eines Regelwerks prüft und bei Zulässigkeit, eine Steuerungseinheit kontaktiert, zum Ansteuern des SIM OTA Enablers, um auf die Anwendung durch den SIM OTA Enabler zuzugreifen und ein Übermitteln der Anwendung über OTA an die SIM auf dem mobilen Endgerät einzuleiten. Die Prozessoren können durch entsprechende Software gesteuert sein.

Nach dem Empfangen einer Anwendungsanfrage wird eine Sendeeinheit eingesetzt (Netzwerkschnittstelle), die eine Information an den Anbieter der Anwendung sendet, der die Anwendung initialisiert, personalisiert, löscht und/oder aktualisiert, durch Nachrichten, die an den SIM OTA Enabler übermittelt werden und von diesem an die SIM des mobilen Endgerätes weitergeleitet werden.

Das System umfasst eine Netzwerkschnittstelle, über die ein Drittanbieter seine Java-Anwendung hoch lädt. Hierbei werden vom Drittanbieter Berechtigungen, insbesondere Zertifikate, Nutzerkennungen und Passwörter benötigt, um sich gegenüber der Enabler-Plattform zu authentifizieren, um sicherzustellen, dass nur Anwendungen auf das mobile Endgerät übertragen werden, die auch die notwendigen Sicherheitsprüfungen überstanden haben und nur von Anwendern stammen, die überprüft wurden.

Die vorliegende Erfindung stellt somit eine Netzbetreiberspezifische Schnittstelle bereit, über die nur SIM-Karten der Kunden des Netzbetreibers mit Java-Anwendungen beladen werden können. Vorteilhaft ist dabei die schnelle Realisierbarkeit der Anbindung sowie die nahtlose Einbindung in möglicherweise bereits existierende Plattformen ("Enablers") des Netzbetreibers, mit denen dieser interne Prozesse und Funktionen für Drittanbieter verfügbar macht.

In einer weiteren Ausprägung der Erfindung bietet der Netzbetreiber seinen Kunden einen Java-Anwendungs-Shop (Application Store) an, mit dem diese selbsttätig die Provisionierung von Anwendungen auf ihre SIM-Karte anstoßen können.

In noch einer weiteren Ausprägung kann die Nutzungsschnittstelle zu dem Java-Anwendungs-Shop auf der SIM-Karte selbst als vorinstallierte Java-Anwendung zur Verfügung gestellt werden. Diese vorinstallierte Anwendung kann als SIM-Toolkit-Anwendung oder als Smartcard Web-Server-Anwendung realisiert sein. Eine weitere vorteilhafte Variante wäre die Realisierung als nachladbare Anwendung auf dem Mobiltelefon, die in diesem Fall sämtliche Fähigkeiten der graphischen Nutzungsschnittstelle des Mobiltelefons ausnutzen kann. SIM Toolkit ist im Wesentlichen ein GSM Standard und definiert neue Funktionen zwischen SIM Karte und Handy, es stellt einige Funktionen bereit, die es erlauben, dass eine Interaktion zwischen dem mobilen Endgerät und der SIM Karte erfolgt. Auf der Basis dieser Funktionen können kleine Anwendungen entwickelt werden. (http://www.cellular.co.za/sim_toolkit.htm)

In beiden zusätzlichen Ausprägungen werden die Enabler-Schnittstellen des Netzbetreibers über eine IP-Verbindung angesprochen, genauso wie ein Drittanbieter die Schnittstellen bedienen könnte.

Die oben beschriebenen Vorteile können mit jedem GSM-Mobiltelefon realisiert werden, das SIM-Application-Toolkit oder Smartcard Webserver unterstützt. Die OTA-Provisionierung an sich ist schon seit geraumer Zeit Teil der GSM-Standards. Beim Smartcard Web Server werden die Kommunikation mit der Smartcard und dem Benutzer durch das HTTP-Protokoll durchgeführt. Hierbei ist zu beachten, dass ein Standardbrowser beim Benutzer eingesetzt werden kann und auf Seiten der Smartcard können entsprechende HTTP Anfragen bearbeitet werden. Über die entsprechende Schnittstelle werden dann Anwendungen auf dem mobilen Endgerät benutzt.

Zusammenfassend hat die vorliegende Erfindung folgende Vorteile gegenüber bestehenden Lösungen:
1. Die OTA-Provisionierung von Javacard-Anwendungen wird für Drittanbieter geöffnet - ohne auf einen Intermediär im Sinne eines Trusted Service Managers angewiesen zu sein.
2. Der Kunde kann selbst die Provisionierung von SIM-basierten Java-Anwendungen auslösen.
3. Die Lösung kann nahtlos in vorhandene Enabler-Plattformen des Netzbetreibers eingebunden werden.

### Wirkungsweise der Erfindung

Voraussetzungen auf Seiten des Mobiltelefon-Nutzers:
1) Der Nutzer verfügt über ein Mobiltelefon, das die OTA-Provisionierung der SIM-Karte gestattet.
2) Optional: Der Nutzer verfügt über ein Mobiltelefon mit SIM-Toolkit-Funktion. Durch diese Funktion kann ein Benutzerinterface vereinfacht bereitgestellt werden, das es ermöglicht, den Download der Software bzw. der Anwendung direkt vom mobilen Endgerät durchzuführen. Beim Ansatz unter Punkt eins wird die Anwendung nicht auf dem mobilen Endgerät ausgewählt und dann auf dieses herunter geladen, sondern es wird zum Beispiel eine HTTP-Verbindung über das Internet zu einem Anwendungsstore aufgebaut, über den dann mitgeteilt wird, auf welche selben die Anwendung herunterzuladen ist. Zu einem späteren Zeitpunkt, nachdem die Anwendung ausgewählt wurde, schaltet der Provider über seinen SIM OTA Enabler die spezifische Anwendung für die SIM-Karte frei und überträgt diese an das Endgerät. Bei den Alternativen 2 und 3 kann die Kommunikation mit dem OTA Enabler direkt über das mobile Endgerät erfolgen, da dieses in der Lage ist, entsprechende Menüs und Listen anzuzeigen.
3) Optional: Der Nutzer verfügt über ein Mobiltelefon, das eine Smartcard Web Server-Funktion bereitstellt, vorzugsweise in Kombination mit dem sog. "Bearer Independent Protocol" (BIP). Das BIP erlaubt den (U)SIM Karten einen schnellen Zugriff auf die Hochgeschwindigkeitsnetzwerke wie GPRS und 3G, was es ermöglicht, die Karten über das Webinterface anzusprechen bzw. was es ermöglicht, dass die Karten schnell Anwendungen herunterladen können.
4) Optional: Der Nutzer verfügt über ein Mobiltelefon mit den Möglichkeiten, Anwendungen nachzuladen. Eine solche Anwendung dient dann zum Herunterladen von SIM Anwendungen.

Voraussetzungen auf Seiten des 3rd-Party-Developers bzw. -Service-Providers:
A) Der Drittanbieter sollte eine geschäftliche Beziehung zum Netzbetreiber bzw. dessen Enabler-Plattform aufgebaut haben.
B) Zudem benötigt der Drittanbieter Berechtigungen (Zertifikate, Nutzerkennungen und Passwörter o. ä.), um sich gegenüber der Enabler-Plattform zu authentifizieren. Hierdurch soll sichergestellt werden, dass nur Anwendungen auf das mobile Endgerät übertragen werden, die auch die notwendigen Sicherheitsprüfungen überstanden haben und nur von Anwendern stammen, die überprüft wurden.

### Figuren Beschreibung:

Im Folgenden werden die Figuren beschrieben, auf die die folgende Beschreibung Bezug nimmt, wobei zu beachten ist, dass die beschriebenen Ausführungsformen keinerlei Beschränkung darstellen sollen, sondern lediglich dazu dienen, eine mögliche Ausführungsform exemplarisch darzustellen.

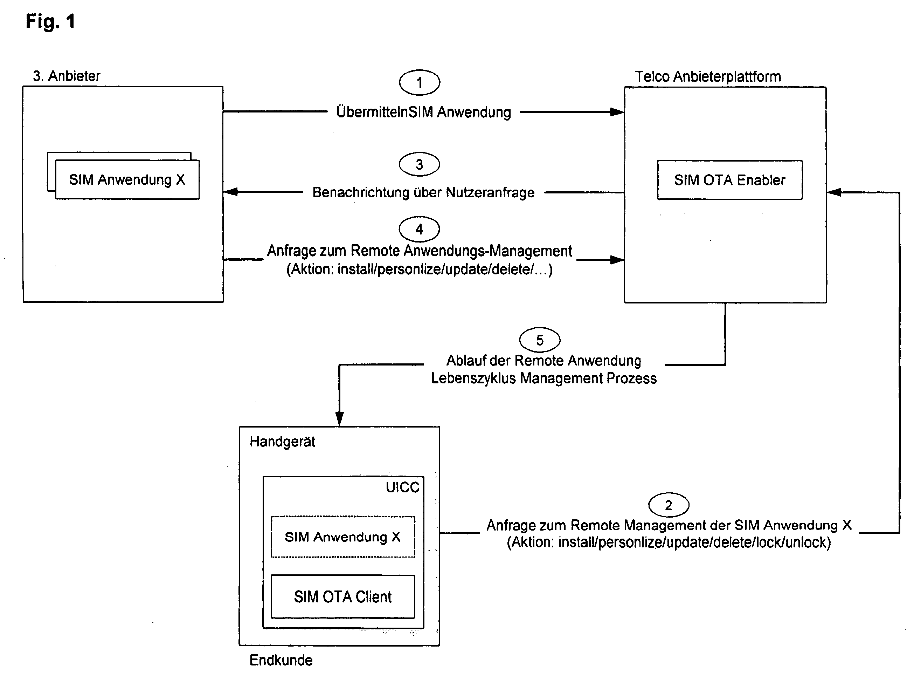

Es zeigt Figur 1 eine Netzwerkstruktur, bei der ein Endgerät mit einem SIM OTA Enabler kommuniziert, um eine Anwendung von einem Dritten anzufordern.

### Beschreibung des Verfahrens

Die Figur 1 zeigt exemplarisch den Ablauf des Verfahrens, bei dem in einer bevorzugten Ausführungsform das mobile Endgerät unmittelbar eine Anwendung eines dritten Anbieters über die SIM OTA Enabler anfragt.

Der Drittanbieter lädt seine Java-Anwendung über die Schnittstelle "Submit Application" (1) zum SIM OTA Enabler des Netzbetreibers hoch.

Je nach Vertrauensstellung zum Drittanbieter führt der Netzbetreiber eine Analyse und/oder Verifikation der Anwendung durch - diese soll ja auf dem GSM-Sicherheitselement, nämlich der SIM-Karte installiert werden.

Für jede individuelle Installation auf einer SIM-Karte eines Endkunden ruft der Drittanbieter die Schnittstelle "Request for Remote Application Management" (4) auf, wobei als Parameter die MSISDN bzw. die IMSI des Endkunden übergeben wird sowie ein Handle auf eine vorab über "Submit Application" (1) hochgeladene Anwendung. Zudem können anwendungs-spezifische Initialisierungsdaten als weiterer Parameter übergeben werden, die der Netzbetreiber über die Telco Enabler Platform over-the-air als APDU-Request an die Anwendung übergibt. Die APDU-Response stellt in diesem Fall den Rückgabewert des "Request for Remote Application Management" dar. Zum Zwecke des Remote Management kann der Aufruf (4) mehrfach getätigt werden.

Für jeden "Request for Remote Application Management" (4) sendet der Netzbetreiber einen "Run remote application life-cycle management process"-Befehl (5) over-the-air an die UICC-Karte im Mobiltelefon.

Wünscht der Endnutzer von sich aus eine Bereitstellung einer UICC-basierten Anwendung, startet er auf seinem Mobiltelefon den "SIM OTA Client" und wählt aus dem Katalog der verfügbaren Anwendungen eine Anwendung zur Installation aus. Dies resultiert in einem Aufruf "Request for Remote Management of the SIM application X" (2) (wobei "X" die ID der gewünschten Anwendung ist) an den "SIM OTA Enabler". Darauf installiert die SIM OTA Enabler-Plattform die gewünschte Anwendung over-the-air auf die UICC im Mobiltelefon. In der Regel erfolgt dies über Remote-Management der SIM nach existierenden GSM-Mechanismen entweder über Management-SMS, die an die SIM-Karte adressiert sind oder bei neueren Handsets über BIP (Bearer-independent protocol, z. B. über UMTS).

Auf dem Handset ist im Falle der Verwendung der SIM Toolkit-Schnittstelle kein Client zu installieren, dieser wird dann über OTA oder bei der Produktion der SIM auf der SIM-Karte abgelegt. Wenn ein graphischer Client auf dem Handset erforderlich ist, kann dieser als Java Midlet oder (je nach Handset) als native Anwendung über die üblichen Wege auf dem Handset aufgebracht werden, z.B. über ein Firmwareupdate.

Ein Aspekt bei Verwendung eines Clients auf dem Handset (im Gegensatz zur Verwendung einer Anwendung auf der SIM) ist es, bei der Backend-Verbindung die Identität der SIM-Karte zur Authentisierung gegenüber dem Backend-Server mitzuverwenden. Hier kann z. B. die GBA-Infrastruktur verwendet werden, wie im GSM standardisiert ist (siehe 3GPP TS 33.919, 33.220 24.109, 29.109, http://www.3gpp.org/).

Alternativ kann diese Anfrage (2) auch über einen Web-Browser erfolgen, der nicht zwangsläufig auf dem mobilen Endgerät installiert sein muss, dieser Ablauf würde dann entsprechend Schritt (4) ablaufen. So kann über einen normalen Computer aus einer Liste bestimmt werden, welche Programme auf das mobile Endgerät zu übertragen sind, um dann die entsprechenden weiteren Verfahrensschritte, die umschrieben wurden, durchzuführen. Hierbei verbindet sich der Standardcomputer über eine HTTP Schnittstelle mit dem SIM OTA Enabler. Diese Verbindung kann entweder unmittelbar erfolgen oder mittelbar, es können auch proprietäre Verfahren verwendet werden. Es erfolgt dann eine Authentifizierung am SIM OTA Enabler und es wird die Identifikation der SIM eingegeben, mit der bestimmt wird, auf welche SIM Karte die ausgewählten Anwendungen zu übertragen ist. Beim nächsten Kontakt der SIM-Karte mit dem Netzwerk wird dann über den SIM OTA Enabler die entsprechende Anwendung auf das mobile Endgerät übertragen.

Der SIM OTA Enabler als Anwendung auf der SIM-Karte des Endgerätes kommuniziert über standardgemäß gesicherte Kanäle mit den Backend-Services (SMS oder BIP-Bearer, siehe oben). Diese Kanäle sind implizit gesichert und erlauben serverseitig eine Identifikation der IMSI.

Zudem sendet die Telco Enabler Platform eine "Notification about user request" (3) mit Handle auf die Anwendungs-ID sowie der MSISDN der UICC an den 3rd-Party Developer bzw. dessen Server-Plattform. Dieser wiederum kann dann die geladene Anwendung über Aufrufe "Request for Remote Application Management" (4) initialisieren bzw. personalisieren und zudem den Nutzer (z.B. über SMS) über die Notwendigkeit einer Registrierung auf einer Web-Site o. ä. benachrichtigen. Je nach Parametrisierung erlaubt die Schnittstelle "Request for Remote Application Management" (4) auch das Löschen bzw. die Aktualisierung der UICC-basierten Anwendung. Die Kommunikation zwischen SIM OTA Enabler und 3rd Party Developer wird über Web Service-Schnittstellen über das gesicherte HTTPS-Protokoll abgewickelt.

Die OTA-Provisionierung erfolgt mit den Standard-OTA-Mechanismen, wie sie für SIM-Karten/UICCs standardisiert sind. Alternativ kann die OTA-Provisionierung über die nachladbare Anwendung auf dem Mobiltelefon erfolgen, indem diese APDU-Requests über eine IP-Verbindung entgegennimmt und an die UICC weiterleitet, sowie APDU-Responses über denselben Weg zur SIM OTA-Enabler Plattform zurücksendet.

Es handelt es sich somit nicht um herkömmliche AppStores, sondern ein AppStore-Enabler für die UICC - die neue Generation der SIM-Karte. Die UICC bietet nicht nur die normalen SIM-Funktionalitäten, sondern sie ist gleichzeitig eine Smart-Karte und eine Multi-Applikations-Plattform, die sichere mobile Anwendungen ermöglicht. Im Gegensatz zu herkömmlichen AppStores, die Anwendung zur Installation auf dem Endgerät anbieten, bietet die Erfindung einen Application Store für Anwendungen, die auf der SIM-Karte abgelegt werden sollen. Im Gegensatz zu Anwendungen auf dem Endgerät sind die SIM-Anwendungen (zusammen mit der UICC/SIM-Karte selbst) zwischen verschiedenen Endgeräten portabel.

## Patentansprüche

1. Verfahren zur individuellen Bereitstellung von Anwendungen auf einem mobilen Endgerät, das eine SIM-Karte aufweist, auf der Anwendungen ablegbar und ausführbar sind, mit einem SIM OTA Enabler, der vom Netzwerkanbieter bereitgestellt wird, und Zugriff (1) auf Anwendungen besitzt, die auf der SIM-Karte ablegbar und ausführbar sind, umfassend die Schritte:
- ein Drittanbieter übermittelt eine SIM Anwendung an den SIM OTA Enabler (1);
- Senden einer Anwendungsanfrage (4) (2) an den SIM OTA Enabler durch einen Benutzer einer SIM-Karte zum Herunterladen einer Anwendung, wobei eine Identifikation der SIM-Karte und der Anwendung übertragen wird;
- Prüfen der Anwendungsanfrage auf Zulässigkeit auf der Basis eines Regelwerks durch den SIM OTA Enabler, wobei der Drittanbieter eine Berechtigung, insbesondere Zertifikate, Nutzerkennungen und Passwörter, benötigt, um sich gegenüber der Enabler-Plattform zu authentifizieren, um sicherzustellen, dass nur Anwendungen auf das mobile Endgerät übertragen werden, die auch die notwendigen Sicherheitsprüfungen überstanden haben und nur von Drittanbietern stammen, die überprüft wurden, und bei Zulässigkeit,
- Zugreifen auf die Anwendung durch den SIM OTA Enabler und Übermitteln der Anwendung über OTA (5) an die SIM auf dem mobilen Endgerät,

2. Das Verfahren nach dem vorhergehenden Anspruch, wobei die Anwendung per SMS oder BIP-Bearer (Bearer Independent Protocol) an die SIM auf dem mobilen Endgerät übertragen (5) wird.

3. Das Verfahren nach einem oder mehreren der vorhergehenden Ansprüche, wobei nach dem Empfangen einer Anwendungsanfrage eine Information an den Anbieter der Anwendung sendet, die die Anwendung initialisiert, personalisiert, löscht und/oder aktualisiert (4) durch Nachrichten, die an den SIM OTA Enabler übermittelt werden und von diesem an die SIM des mobilen Endgerätes weitergeleitet werden.

4. Das Verfahren nach einem oder mehreren der vorhergehenden Ansprüche, wobei es sich um eine Javacard- Anwendung handelt.

5. Das Verfahren nach einem oder mehreren der vorhergehenden Ansprüche, wobei das mobile Endgerät eine SIM-Toolkit-Funktion aufweist, die ein Benutzerinterface auf dem mobilen Endgerät bereitstellt, durch das die Anwendungsanfrage (2) vereinfacht interaktiv erzeugt werden.

6. Das Verfahren nach einem oder mehreren der vorhergehenden Ansprüche, wobei als Anwendungsanfrageparameter (2) die MSISDN oder IMSI der SIM übergeben wird sowie ein Identifikator auf eine vorab über "Submit Application" (1) hochgeladene Anwendung.

7. Das Verfahren nach dem vorhergehenden Anspruch, wobei anwendungsspezifische Initialisierungsdaten als weiterer Parameter übergeben werden (2), die der SIM OTA Enabler als APDU-Request an die Anwendung übergibt.

8. System zur individuellen Bereitstellung von Anwendungen auf einem mobilen Endgerät, das eine SIM-Karte aufweist, auf der Anwendungen ablegbar und ausführbar sind, umfassend einem SIM OTA Enabler, und Zugriff (1) auf Anwendungen besitzt, die auf der SIM-Karte ablegbar und ausführbar sind, umfassend:
- Schnittstelle zum Empfangen einer SIM Anwendung an den SIM OTA Enabler durch einen Drittanbieter;
- Empfangseinheit für Anwendungsanfrage (4) von einem Benutzer einer SIM-Karte, zum Herunterladen einer Anwendung, wobei die Identifikation zur Bestimmung der SIM-Karte übertragen wird;
- Prüfeinheit, die die Anwendungsanfrage auf Zulässigkeit auf der Basis eines Regelwerks prüft, wobei der Drittanbieter eine Berechtigung, insbesondere Zertifikate, Nutzerkennungen und Passwörter, benötigt, um sich gegenüber der Enabler-Plattform zu authentifizieren, um sicherzustellen, dass nur Anwendungen auf das mobile Endgerät übertragen werden, die auch die notwendigen Sicherheitsprüfungen überstanden haben und nur von Drittanbietern stammen, die überprüft wurden, und bei Zulässigkeit
- Steuerungseinheit zum Ansteuern des SIM OTA Enablers, um auf die Anwendung durch den SIM OTA Enabler zuzugreifen und ein Übermitteln der Anwendung über OTA (5) an die SIM auf dem mobilen Endgerät einzuleiten.

9. Das System nach dem vorhergehenden Systemanspruch, wobei eine Schnittstelle vorhanden ist, um die Anwendung per SMS oder BIP-Bearer (Bearer Independent Protocol) an die SIM auf dem mobilen Endgerät zu übertragen (5).

10. Das System nach einem oder mehreren der vorhergehenden Systemansprüche, wobei nach dem Empfangen einer Anwendungsanfrage eine Sendeeinheit eingesetzt wird, die eine Information an den Anbieter der Anwendung sendet, der die Anwendung initialisieren, personalisieren, löscht und/oder aktualisiert (4) durch Nachrichten, die an den SIM OTA Enabler übermittelt werden und von diesem an die SIM des mobilen Endgerätes weitergeleitet werden.

11. Das System nach einem oder mehreren der vorhergehenden Systemansprüche, wobei es sich um eine Javacard-Anwendung handelt.

12. Das System nach einem oder mehreren der vorhergehenden Systemansprüche, wobei eine Schnittstelle vorhanden ist, über die ein Drittanbieter seine Java-Anwendung hochlädt.

13. Das System nach einem oder mehreren der vorhergehenden Systemansprüche, wobei als Anwendungsanfrageparameter (2) die MSISDN oder IMSI der SIM übergeben wird sowie ein Identifikation auf eine vorab über "Submit Application" (1) hochgeladene Anwendung.

14. Das System nach dem vorhergehenden Systemanspruch, wobei Mittel vorhanden sind, um anwendungsspezifische Initialisierungsdaten als weitere Parameter zu übergeben (2), die der SIM OTA Enabler als APDU-Request an die Anwendung übergibt.

## Claims

1. Method for individual provision of applications on a mobile device that has a SIM card on which applications are storable and executable, with a SIM OTA Enabler, which is provided by the network provider, and which has access (1) on applications on the SIM card which are storable and executable on the SIM-Card, comprising the steps:
- a third-party provider transmits a SIM application to the SIM OTA Enabler (1);
- sending an application request (4) (2) to the SIM OTA Enabler by a user of a SIM card to download an application , wherein an identification of the SIM card and the application is transmitted;
- checking the application request on admissibility on the basis of a set of rules by the SIM OTA enabler, wherein the third-party provider requires an authorization, in particular certificates, user IDs and passwords, in order to authenticate against the Enabler platform, to ensure that only applications are transmitted to the mobile terminal device, which also passed the necessary safety checks and only come from third- party providers that were proofed, and on admissibility ,
- accessing the application through the SIM OTA Enabler and submitting the application via OTA (5) to the SIM on the terminal mobile device ,

2. The method according to the preceding claim, wherein the application is transmitted by SMS or GDP Bearer (Bearer Independent Protocol) to the SIM on the mobile terminal device (5).

3. The method according to one or more of the preceding claims, wherein after receiving an application request, an information is send to the provider of the application, which initializes, personalizes, deletes and / or updates (4) the application through messages sent to the SIM OTA enabler and are forwarded by it to the SIM of the mobile terminal device.

4. The method according to one or more of the preceding claims, wherein it is a Java card application.

5. The method according to one or more of the preceding claims, wherein the mobile terminal device has a SIM toolkit functionality providing a user interface on the mobile terminal device, by which the application request (2) are simplified interactively generated.

6. The method according to one or more of the preceding claims, wherein as application request parameters (2) the MSISDN or IMSI are passed to the SIM and an identifier on an previously by a " Submit Application"(1) uploaded application.

7. The method according to the preceding claim, in which application-specific initialization data is passed as an additional parameter (2), which transfers the SIM OTA Enabler as APDU request to the application.

8. System for individual provision of applications on a mobile terminal device that has a SIM card on which applications are storable and executable comprising a SIM OTA enabler, and has access (1) on applications are storable and executable on the SIM card, comprising:
- Interface for receiving a SIM application on the SIM OTA Enabler by a third-party provider;
- receiving unit for a application request (4) by a user of a SIM card, to download an application, wherein the identification is transmitted to determine the SIM card ;
- Checking unit that checks the application request on admissibility on the basis of a set of rules, wherein the third-party provider requires an authorization, in particular certificates, user IDs and passwords to authenticate against the Enabler platform to ensure that only applications are transmitted to the mobile device, which also passed the necessary safety checks and only come from third party providers that have been checked, and on admissibility
- Control unit for driving the OTA SIM enabler for accessing the application through the OTA SIM enabler and to initiate the transmittal of the application by OTA (5) to the SIM on the mobile terminal device.

9. The system system according to the preceding claim, wherein an interface is provided in order to transmit the application by SMS or GDP Bearer (Bearer Independent Protocol) to the SIM on the mobile terminal device (5).

10. The system according to one or more of the preceding system claims, wherein, after receiving an application request, a transmission unit is used, which transmits information to the provider of the application, initializing, personalizing, deleting and / or updating (4) the application through messages that are transmitted to the OTA SIM enabler and are passed therefrom to the SIM of the mobile terminal device.

11. The system according to one or more of the preceding system claims, wherein it is a Java card application.

12. The system according to one or more of the preceding claims, wherein an interface is available by which a third party provider uploads its Java application.

13. The system according to one or more of the preceding claims, wherein as application request parameters (2) the MSISDN or IMSI are provided to the SIM as well as an identification of an previously by "Submit Application" (1) uploaded application.

14. The system according to the preceding claim, wherein means are provided for providing user-specific initialization data as another parameter (2), which are passed by the OTA SIM enabler as APDU request to the application.

## Revendications

1. Méthode pour une mise à disposition individuelle d'applications sur un dispositif mobile ayant une carte SIM sur laquelle les applications peuvent être stockées et exécutées, avec un SIM OTA Enableur, qui est fourni par le fournisseur d'accès au réseau, et qui a un accès (1) aux applications sur la carte SIM qui sont stockées et exécutables sur la carte SIM, comportant les étapes :
- un fournisseur tiers transmet une application au SIM OTA Enableur (1) ;
- l'envoi par l'utilisateur d'une carte SIM d'une requête d'application (4) (2) au SIM OTA Enableur pour le téléchargement d'une application, dans laquelle sont transmis un identifiant de la carte SIM et de l'application ;
- la vérification d'admissibilité de la requête d'application sur la base d'un ensemble de règles au moyen du SIM OTA Enabler, dans lequel le fournisseur tiers exige une autorisation, en particulier des certificats, des identifiants utilisateurs et des mots de passe, dans le but d'une authentification de plate-forme d'Enableur, pour assurer que ne sont transmises au dispositif terminal mobile que les seules applications qui ont validé les vérifications de sécurité requises et qui en outre proviennent de fournisseurs tiers accrédités, ainsi que les règles d'admissibilité,
- l'accès l'application via le SIM OTA Enableur et la soumission de l'application via OTA (5) à la SIM sur le dispositif terminal mobile.

2. La méthode selon la revendication précédente, dans laquelle l'application est transmise à la SIM sur le dispositif terminal mobile via SMS ou GDP Bearer (*Bearer Independent Protocol*)*.*

3. La méthode selon l'une ou plusieurs des revendications précédentes, dans laquelle à la suite de la réception d'une requête d'application, une information est transmise au fournisseur de l'application, lequel initialises, personalise, efface et/ou met à jour (4) l'application via des messages envoyé au SIM OTA Enabler et qui est transmise par lui au SIM du dispositif terminal mobile.

4. La méthode selon l'une ou plusieurs des revendications précédentes, dans laquelle l'application est une application de carte java.

5. La méthode selon l'une ou plusieurs des revendications précédentes, dans laquelle le dispositif terminal mobile présente une fonctionnalité de kit d'outils SIM fournissant une interface utilisateur sur le dispositif terminal mobile, au moyen de laquelle la requête d'application (2) est générée de manière interactive et simplifiée.

6. La méthode selon l'une ou plusieurs des revendications précédentes, dans laquelle sont transférées à la SIM en tant que paramètres de la requête d'application (2), les MSISDN ou IMSO ainsi qu'un identifiant sur une application préalablement téléchargée par un « *Submit Application* » (1).

7. La méthode selon la revendication précédente, dans laquelle les données d'initialisation spécifiques à l'application sont transférées comme paramètres additionnel (2), ce qui transfère à l'application le SIM OTA Enableur en tant que requête APDU.

8. Un système pour une mise à disposition individuelle d'applications sur un dispositif terminal mobile ayant une carte SIM sur laquelle les applications peuvent être stockées et exécutées, comportant un SIM OTA Enableur, et qui a un accès (1) à des applications qui sont stockées et exécutables sur la carte SIM, comprenant:
- une interface pour la réception d'une application SIM sur le SIM OTA Enableur (1) via un fournisseur tiers ;
- une unité de réception pour une requête d'application (4) par l'utilisateur d'une carte SIM, pour le téléchargement d'une application, dans laquelle une identification est transmise pour déterminer la carte SIM ;
- une unité de vérification pour la vérification d'admissibilité de la requête d'application sur la base d'un ensemble de règles, dans lequel le fournisseur tiers exige une autorisation, en particulier des certificats, des identifiants utilisateurs et des mots de passe, dans le but d'une authentification de plateforme d'Enableur, pour assurer que ne sont transmises au dispositif terminal mobile que les seules applications qui ont validé les vérifications de sécurité requises et qui en outre proviennent de fournisseurs tiers accrédités, ainsi que les règles d'admissibilité,
- une unité de commande pour piloter le SIM OTA Enableur pour accéder à l'application via le OTA SIM Enableur et pour engager la transmission de l'application via OTA (5) à la SIM sur le dispositif terminal mobile.

9. Le système selon la revendication précédente, dans lequel une interface est fournie pour la transmission à la SIM sur le dispositif terminal mobile (5) via SMS ou GDP Bearer (Bearer Independent Protocol).

10. Le système selon l'une ou plusieurs des revendications systèmes précédentes, dans laquelle à la suite de la réception d'une requête d'application, une unité de transmission es utilisée, laquelle transmet une information au fournisseur de l'application, initialise, personnalise, efface et/ou met à jour (4) l'application via des messages envoyés au SIM OTA Enableur et qui sont transmis par lui au SIM du dispositif terminal mobile.

11. Le système selon selon l'une ou plusieurs des revendications systèmes précédentes, dans lequel l'application est une application de carte java.

12. Le Système selon l'une ou plusieurs des revendications systèmes précédentes, comportant un interface grâce à laquelle un fournisseur tiers peut télécharger son application java.

13. Le système selon l'une ou plusieurs des revendications systèmes précédentes, dans lequel sont transférées à la SIM en tant que paramètres de la requête d'application (2), les MSISDN ou IMSO ainsi qu'un identifiant sur une application préalablement téléchargée par un « *Submit Application* » (1).

14. Le système selon la revendication précédente, dans lequel des moyens sont mis à disposition pour fournir des données d'initialisation spécifiques à l'utilisateur en tant qu'autre paramètre (2), lesquels sont transférés à l'application par le OTA SIM Enableur en tant que requête APDU.
